# EUROPÄISCHE PATENTSCHRIFT

(11) **EP 1 582 709 B1**
(45) Veröffentlichungstag und Bekanntmachung des Hinweises auf die Patenterteilung: **07.05.2014**
(21) Anmeldenummer: 05101599.8
(22) Anmeldetag: 02.03.2005
(51) Int. Cl.: F01N 3/10, F01N 3/20, F02D 41/02, F01N 9/00, F02D 41/14, F02D 41/18, F01N 3/023, F01N 3/035, F01N 13/02

(54) **Regenerationsverfahren für ein Partikelfilter sowie Abgasanlage mit Partikelfilter**
Method of regeneration for a particulate filter and an exhaust gas system with a particulate filter
Méthode de régénération d'un filtre à particule ainsi qu'un système d'échappement avec un filtre à particule

(30) Priorität: 31.03.2004 DE 102004016538
(43) Veröffentlichungstag der Anmeldung: 05.10.2005
(73) Patentinhaber: Eberspächer Exhaust Technology GmbH & Co. KG, 66539 Neunkirchen (DE)
(72) Erfinder: Rudelt, Josef, 73773, Aichwald (DE); Gaiser, Gerd, 72768, Reutlingen (DE)
(74) Vertreter: BRP Renaud & Partner

(56) Entgegenhaltungen:
- EP-A2- 1 517 011
- WO-A-2005/090759
- WO-A2-2005/005797
- FR-A- 2 831 923

## Beschreibung

Die vorliegende Erfindung betrifft ein Verfahren zum Regenerieren eines in einem Abgasstrang einer Brennkraftmaschine angeordneten Partikelfilters, insbesondere in einem Kraftfahrzeug. Die Erfindung betrifft außerdem eine Abgasanlage einer Brennkraftmaschine, insbesondere in einem Kraftfahrzeug, mit einem in einem Abgasstrang der Brennkraftmaschine angeordneten Partikelfilter.

Um die Partikelemission bei Brennkraftmaschinen, insbesondere von Kraftfahrzeugen, zu reduzieren, ist es allgemein bekannt, im Abgasstrang der Brennkraftmaschine ein Partikelfilter anzuordnen. Ein derartiges Partikelfilter wird in der Regel auch als Rußfilter bezeichnet, da es sich bei den im Abgas mitgeführten Partikeln, insbesondere bei Dieselmotoren, vorwiegend um Ruß handelt. Im Betrieb der Brennkraftmaschine reichern sich die ausgefilterten Partikel im jeweiligen Partikelfilter an, was allmählich zu einem Gegendruckanstieg bzw. Druckabfall bei der Durchströmung des Partikelfilters führt. Dementsprechend ist es üblich, das Partikelfilter regelmäßig einem Regenerationsvorgang zu unterwerfen, bei dem die darin abgelagerten Partikel abgebrannt werden. Um eine derartige Verbrennungsreaktion zur Regeneration des Partikelfilters initiieren zu können, muss die Temperatur im Partikelfilter bzw. in der dem Partikelfilter zugeführten Abgasströmung erhöht werden.

Grundsätzlich kann eine derartige Temperaturerhöhung im Abgas durch motorseitige Maßnahmen realisiert werden. Beispielsweise kann mit Hilfe einer entsprechend ausgestalteten Einspritzeinrichtung der Brennkraftmaschine zusätzlicher Kraftstoff so spät in die Brennräume der Brennkraftmaschine eingespritzt werden, dass dieser nicht mehr verbrennt, so dass unverbrannter Kraftstoff in den Abgasstrang gelangt. Stromauf des Partikelfilters ist dann zweckmäßig ein Oxidationskatalysator angeordnet, der eine Umsetzung der zusätzlich eingedüsten Kraftstoffmenge bewirkt. Hierbei kommt es zu einer stark exothermen Reaktion, was die gewünschte Temperaturerhöhung in der Abgasströmung bewirkt. Derartige motorseitige Maßnahmen sind zwar vergleichsweise preiswert realisierbar, haben jedoch auch gewisse Nachteile. Beispielsweise kann eine späte Nacheinspritzung von Kraftstoff zu einer Verdünnung des Motorschmieröls sowie zu einer mangelnden Schmierung der Kolben in den Zylindern führen.

Um dies zu vermeiden, kommen Sekundäreinspritzanlagen zur Anwendung, die mit Hilfe einer Einspritzdüse die Eindüsung von Kraftstoff stromab der Brennkraftmaschine ermöglichen.

Derartige Sekundäreinspritzanlagen sind beispielsweise aus der DE 30 46 258 A1, der US 2003/0140621 A1 und aus der US 2003/0230076 A1 bekannt.

Die vorliegende Erfindung beschäftigt sich mit dem Problem, für die Regeneration eines Partikelfilters einen verbesserten Weg aufzuzeigen, der insbesondere instationäre Betriebszustände der Brennkraftmaschine, insbesondere eines Kraftfahrzeugs, berücksichtigt.

Erfindungsgemäß wird dieses Problem durch die Gegenstände der unabhängigen Ansprüche gelöst. Vorteilhafte Ausführungsformen sind Gegenstand der abhängigen Ansprüche.

WO 2005/090759, nachveröffentlichter Stand der Technik gemäß Art 56 EPÜ, offenbart eine Abgasanlage nach dem Oberbegriff des Anspruchs 8.

Die vorliegende Erfindung beruht auf dem allgemeinen Gedanken, das instationäre Betriebsverhalten der Brennkraftmaschine mit Hilfe eines Massenstromsignals zu berücksichtigen, das mit einem das Partikelfilter durchströmenden Massenstrom korreliert. Für den Start des Regenerationsvorgangs wird dieses Massenstromsignal in Verbindung mit einem Druckabfallsignal, das mit einem von der Abgasströmung bei der Durchströmung des Partikelfilters zu überwindenden Druckabfall bzw. Gegendruck korreliert, zur Ermittlung eines Beladungssignals verwendet, das mit einer Partikelbeladung des Partikelfilters korreliert. Alternativ oder zusätzlich wird für eine Temperaturregelung zum Starten des Regenerationsvorgangs das Massenstromsignal zur Adaption von Regelparametern an ein Zeitverhalten der Regelstrecke verwendet.

Erfindungsgemäß wird dieses Problem durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, das instationäre Betriebsverhalten der Brennkraftmaschine mit Hilfe eines Massenstromsignals, das aus einem mittels eines Massenstromsensors ermittelten Massenstrom eines der Brennkraftmaschine zugeführten Frischgasstroms ermittelt wird, zu berücksichtigen, das mit einem das Partikelfilter durchströmenden Massenstrom korreliert. Für den Start des Regenerationsvorgangs wird dieses Massenstromsignal in Verbindung mit einem Druckabfallsignal, das mit einem von der Abgasströmung bei der Durchströmung des Partikelfilters zu überwindenden Druckabfall bzw. Gegendruck korreliert, zur Ermittlung eines Beladungssignals verwendet, das mit einer Partikelbeladung des Partikelfilters korreliert. Alternativ oder zusätzlich wird für eine Temperaturregelung zum Starten des Regenerationsvorgangs das Massenstromsignal zur Adaption von Regelparametern an ein Zeitverhalten der Regelstrecke verwendet.

Erfindungsgemäß kann das Massenstromsignal aus einem Massenstrom eines der Brennkraftmaschine zugeführten Frischgasstroms ermittelt werden. Diese Ausführungsform beruht auf der Überlegung, dass sich der Massenstrom der Frischgasströmung nur unwesentlich von demjenigen der Abgasströmung unterscheidet, so dass insbesondere eine Korrelation zwischen Abgasmassenstrom und Frischgasmassenstrom besteht, die es ermöglicht, den Frischgasmassenstrom für die Berücksichtigung des Abgasmassenstroms zu verwenden. Da eine herkömmliche Brennkraftmaschine im Ansaugtrakt üblicherweise einen Massenstromsensor, sogenannter Luftmassenmesser, insbesondere ein Heißfilmmesser, aufweist, kann die Erfindung für die Ermittlung des Massenstromsignals auf eine an der Brennkraftmaschine ohnehin vorhandene Sensorik zugreifen, was den Aufwand zur Realisierung der Erfindung erheblich reduziert.

Die Berücksichtigung des Massenstromsignals im Beladungssignal beruht auf der Erkenntnis, dass der Durchströmungswiderstand des Partikelfilters unter anderem auch von der Strömungsgeschwindigkeit bzw. vom Massenstrom des Abgasstroms abhängt. Diese Abhängigkeit führt bei einem relativ kleinen Massenstrom zu einem entsprechend geringen Druckabfall bzw. Gegendruckanstieg am Partikelfilter, während bei gleicher Beladung das Partikelfilter bei einem größeren Massenstrom einen deutlich erhöhten Gegendruck erzeugt. Dieser Zusammenhang kann beispielsweise dazu führen, dass eine Brennkraftmaschine relativ lange mit vergleichsweise kleinen Abgasmassenströmen betrieben werden kann, wobei das Partikelfilter einen vergleichsweise hohen Beladungsgrad erreichen kann, ohne dass hierbei der Druckabfall am Partikelfilter einen vorbestimmten kritischen Wert erreicht. Sobald die Brennkraftmaschine dann jedoch mit einem höheren Abgasmassenstrom betrieben wird, z. B. Volllast, steigt der Druckabfall am Partikelfilter quasi sprunghaft an, wodurch ein für diesen Betriebszustand der Brennkraftmaschine kritischer Beladungszustand des Partikelfilters deutlich überschritten werden kann. Der damit einhergehende, relativ große Druckabfall am Partikelfilter reduziert die von der Brennkraftmaschine erzeugbare Leistung. Durch die erfindungsgemäße Berücksichtigung des Massenstromsignals bei der Ermittlung des Beladungszustands des Partikelfilters kann dieser Nachteil vermieden werden. Dementsprechend führt die Erfindung zu einer Verbesserung der Partikelfilterregeneration, insbesondere im Hinblick auf ein hohes Leistungsniveau der Brennkraftmaschine.

Die erfindungsgemäß vorgeschlagene Adaption des Regelkreises bzw. dessen Regelparameter an den aktuellen Massenstrom beruht auf der Erkenntnis, dass das Zeitverhalten der Regelstrecke eine starke Abhängigkeit vom aktuellen Betriebszustand der Brennkraftmaschine aufweist. Dabei hat sich gezeigt, dass der vom Betriebszustand abhängige Massenstrom der Abgasströmung einen besonders signifikanten Einfluss auf das Zeitverhalten der Regelstrecke besitzt. Beispielsweise führt ein Betrieb der Brennkraftmaschine bei Volllast sehr viel schneller und quasi von selbst zu einem starken Temperaturanstieg im Abgasstrom, während ein Grundlastbetrieb, z. B. bei Standgas und/oder Leerlauf, relativ viel Zeit benötigt, um den erwünschten Temperaturanstieg zu realisieren. Durch die Erfindung kann nun der Einfluss des aktuellen Betriebszustands der Brennkraftmaschine auf das Zeitverhalten der Regelstrecke berücksichtigt werden, indem hierzu geeignete Regelparameter des Regelkreises in Abhängigkeit des aktuellen Massenstroms permanent an das sich ändernde Zeitverhalten der Regelstrecke angepasst werden. Der Regenerationsvorgang kann durch die erfindungsgemäßen Maßnahmen somit erheblicher präziser gesteuert bzw. geregelt werden, was kurze Regenerationszeiten sowie ökonomische Regenerationsvorgänge ermöglicht.

Gemäß einer bevorzugten Ausführungsform kann das Beladungssignal durch einen Quotienten aus Druckabfallsignal und Massenstromsignal gebildet werden. Auf diese Weise wird das Druckabfallsignal mit Hilfe des Massenstromsignals quasi normiert, was die Abhängigkeit des Beladungssignals vom aktuellen Betriebszustand der Brennkraftmaschine reduziert bzw. eliminiert.

Zweckmäßigerweise können die Regelparameter, die in Abhängigkeit des Massenstromsignals adaptiert werden, ein Proportionalanteil und/oder ein Integralanteil und/oder ein Differentialanteil eines Reglers, insbesondere eines PID-Reglers, des Regelkreises sein. Die genannten Regelparameter werden auf das Zeitverhalten des Regelkreises abgestimmt, was eine effektive Adaption an das instationäre Zeitverhalten der Regelstrecke ermöglicht.

Des Weiteren kann es zweckmäßig sein, die Regelparameter mittels des Massenstromsignals zu berechnen oder aus Kennfeldern oder Kennlinien zu ermitteln. Beide Vorgehensweisen haben sich in anderen Bereichen der Steuerungstechnik als zuverlässige bewährt und ermöglichen quasi eine Echtzeitermittlung der Regelparameter und somit eine quasi zeitgleiche Adaption des Regelkreises.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

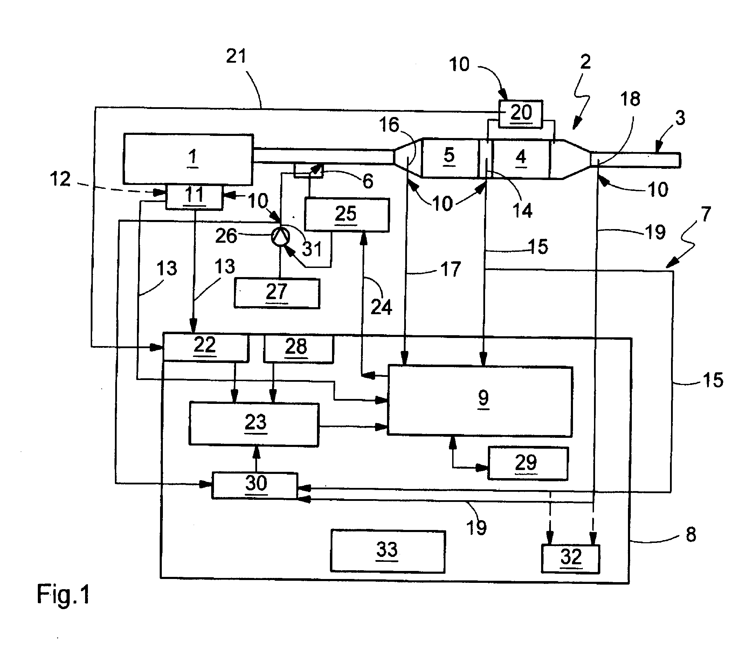

Die einzige Figur 1 zeigt eine stark vereinfachte, schaltplanartige Prinzipdarstellung einer Abgasanlage mit einem zugehörigen Steuerungssystem.

Entsprechend Fig. 1 besitzt eine Brennkraftmaschine 1, insbesondere eines Kraftfahrzeugs, eine Abgasanlage 2 mit einem Abgasstrang 3. Im Abgasstrang 3 ist ein Partikelfilter 4, insbesondere ein Rußfilter, angeordnet. Stromauf des Partikelfilters 4 ist im Abgasstrang 3 ein Oxidationskatalysator 5 angeordnet. Zweckmäßig sind Partikelfilter 4 und Oxidationskatalysator 5 in einem gemeinsamen Gehäuse untergebracht. Stromauf des Oxidationskatalysators 5 ist am Abgasstrang 3 eine Sekundäreinspritzanlage 6 angeordnet, mit deren Hilfe Kraftstoff stromauf des Oxidationskatalysators 5 in den Abgasstrang 3 eingedüst werden kann. Eine derartige sekundäre Kraftstoffeindüsung führt im Oxidationskatalysator 5 zu einer stark exothermen Reaktion, was die Abgastemperatur erhöht. Dies führt letztlich zu einer Aufheizung des Partikelfilters 4. Sobald dieser bzw. die darin abgelagerten Partikel eine gewisse Zündtemperatur erreichen, können diese abbrennen, wodurch das Partikelfilter 4 regeneriert wird.

Zum Steuern bzw. Regeln eines derartigen Regenerationsvorgangs ist die Abgasanlage 2 mit einem Steuerungssystem 7 ausgestattet, das beispielsweise eine durch einen Rechteckrahmen angedeutete Steuereinrichtung 8 umfasst. Die Steuereinrichtung 8 weist als zentrale Steuereinheit 9 beispielsweise eine speicherprogrammierbare Steuerung, einen Mikroprozessor, einen Rechner oder eine CPU auf und wird im Folgenden auch verkürzt mit CPU 9 bezeichnet.

Das Steuerungssystem 7 arbeitet mit einer Sensorik 10 zusammen, die mehrere einzelne Komponenten umfasst. Beispielsweise weist die Sensorik 10 einen Massenstromsensor 11 auf, der zweckmäßig in einem Frischgasstrang 12 der Brennkraftmaschine 1 angeordnet ist und in vorteilhafter Weise durch einen herkömmlichen Luftmassenmesser, z.B. ein Heißfilmmesser, gebildet sein kann, mit dem die Brennkraftmaschine 1 ohnehin ausgestattet ist. Der Massenstromsensor 11 ermittelt im Betrieb der Brennkraftmaschine 1 ein Massenstromsignal und leitet dieses über entsprechende Signalleitungen 13 der Steuereinrichtung 8 bzw. der CPU 9 zu.

Die Sensorik 10 umfasst außerdem einen ersten Temperatursensor 14, mit dessen Hilfe stromauf des Partikelfilters 4 und stromab des Oxidationskatalysators 5 eine Temperatur im Abgas ermittelt werden kann. Das vom ersten Temperatursensor 14 generierte Temperatursignal wird über eine entsprechende Signalleitung 15 der Steuereinrichtung 8 bzw. der CPU 9 übermittelt. Des Weiteren umfasst die Sensorik 10 einen zweiten Temperatursensor 16, der eine Temperatur stromauf des Oxidationskatalysators 5 ermittelt und ein damit korrelierendes Temperatursignal über eine Signalleitung 17 der Steuereinrichtung 8 bzw. der CPU 9 übermittelt. Des Weiteren kann die Sensorik 10 gemäß der hier gezeigten besonderen Ausführungsform einen dritten Temperatursensor 18 aufweisen, der die Temperatur im Abgas stromab des Partikelfilters 4 ermittelt und über eine entsprechende Signalleitung 19 ein damit korrelierendes Temperatursignal der Steuereinrichtung 8 zuführt.

Die Sensorik 10 besitzt außerdem einen Differenzdrucksensor 20, mit dessen Hilfe ein Druckabfall über dem Partikelfilter 4 gemessen werden kann. Das heißt, der Differenzdrucksensor 20 misst im Betrieb der Brennkraftmaschine 1 die Druckdifferenz zwischen der Anströmseite des Partikelfilters 4 und dessen Abströmseite. Ein vom Differenzdrucksensor 20 ermitteltes Druckabfallsignal wird über eine entsprechende Signalleitung 21 der Steuereinrichtung 8 übermittelt.

In der Steuereinrichtung 8 wird in einer entsprechenden Auswerteeinheit 22 ein Beladungssignal ermittelt. Hierbei berücksichtigt die Steuereinrichtung 8 einerseits das Massenstromsignal des Massenstromsensors 11 und andererseits das Druckabfallsignal des Druckdifferenzsensors 20. Das so gebildete Beladungssignal korreliert dabei mit der aktuellen Beladung des Partikelfilters 4. Vorzugsweise wird dabei das Beladungssignal durch einen Quotienten aus Druckabfallsignal und Massenstromsignal gebildet, wobei vorzugsweise das Druckabfallsignal mit dem Massenstromsignal normiert wird. Durch die erfindungsgemäße Vorgehensweise bei der Bestimmung des Beladungssignals kann der Einfluss des Massenstroms auf den Druckabfall am Partikelfilter 4 berücksichtigt werden.

Auf diese Weise kann der Beladungszustand des Partikelfilters genauer bestimmt werden, und zwar insbesondere unabhängig vom aktuellen Betriebszustand der Brennkraftmaschine 1.

Die von der Auswerteeinheit 22 ermittelte Beladungssignal wird dann einer Schalteinheit 23 der Steuereinrichtung 8 zugeführt, mit deren Hilfe ein Schaltsignal zum Einschalten oder Ausschalten der sekundären Brennstoffzuführung generiert wird. Zu diesem Zweck vergleicht die Schalteinheit 23 das eingehende Beladungssignal mit einem vorbestimmten Grenzwert. Sobald der genannte Grenzwert erreicht oder überschritten ist, gibt die Schalteinheit 23 ein Aktivierungssignal an die CPU 9, die dann über eine entsprechende Steuerleitung 24 eine Einspritzsteuerung 25 betätigt bzw. ansteuert. Die Einspritzsteuerung 25 aktiviert dann, insbesondere vorab, zum einen eine Kraftstoffpumpe 26, die saugseitig an ein entsprechendes Kraftstoffreservoir 27 angeschlossen ist, das insbesondere durch einen Kraftstofftank der Brennkraftmaschine 1 bzw. des damit ausgestatteten Kraftfahrzeugs gebildet sein kann. Die Kraftstoffpumpe 26 baut dann druckseitig den gewünschten Einspritzdruck auf. Zum anderen betätigt die Einspritzsteuerung 25 die Sekundäreinspritzanlage 6, die zu diesem Zweck beispielsweise eine elektronisch ansteuerbare Einspritzdüse aufweist. Durch den Einspritzvorgang wird - wie bereits oben erläutert - die Regeneration des Partikelfilters 4 eingeleitet.

Über die Erfassung und Auswertung des Beladungssignals kann somit die Regeneration des Partikelfilters 4 automatisch gestaltet werden. Zusätzlich kann optional eine Betätigungseinheit 28 vorgesehen sein, mit deren Hilfe z. B. der Fahrzeugführer manuell einen Regenerationsvorgang für das Partikelfilter 4 starten kann. Bei der Betätigung z. B. eines entsprechenden Schalters wird dann ein geeignetes Aktivierungssignal an die Schalteinheit 23 geleitet, die dann den Aktivierungswunsch der CPU 9 mitteilt.

Beachtenswert ist hierbei, dass mit Hilfe des Massenstromsensors 11 ein der Brennkraftmaschine 1 aktuell zugeführter Frischgasmassenstrom ermittelt wird. Dieser Frischgasmassenstrom korreliert jedoch mit dem Abgasmassenstrom, der die Brennkraftmaschine 1 verlässt und der im folgenden auch das Partikelfilter 4 durchströmt. Somit korreliert das vom Massenstromsensor 11 ermittelte Massenstromsignal auch mit dem durch das Partikelfilter 4 geleiteten Abgasmassenstrom. Wichtig für die Normierung des Druckabfallsignals ist ein mit dem Abgasmassenstrom korrelierendes Signal. Bei der Erfindung wird die Erkenntnis ausgenutzt, dass der Abgasmassenstrom mit dem Frischgasmassenstrom korreliert, so dass für die Bestimmung des Beladungssignals das ohnehin vorhandene Massenstromsignal des im Frischgastrakt 12 angeordneten Massenstromsensors 11 verwendet werden kann.

Ziel der Kraftstoffeinspritzung in den Abgasstrang 3 ist letztlich eine gezielte Temperaturerhöhung im Partikelfilter 4 bzw. in dem dem Partikelfilter 4 zugeführten Abgasstrom. Die Steuereinrichtung 8 führt hierzu eine Regelung durch, die als Stellgröße die eingespritzte Kraftstoffmenge und die als Regelgröße die Abgastemperatur stromauf des Partikelfilters 4 und stromab des Oxidationskatalysators 5 verwendet. Dementsprechend nutzt die Steuereinrichtung 8 das Temperatursignal des ersten Temperatursensors 14. Der erste Temperatursensor 14 liefert somit einen Istwert für die einzuregelnde Abgastemperatur. Die Steuereinrichtung 8 vergleicht nunmehr die gemessene Isttemperatur mit einer für die Initiierung des Verbrennungsvorgangs im Partikelfilter 4 gewünschten Solltemperatur. In Abhängigkeit dieses Soll-Ist-Vergleichs wird dann die Einspritzdüse der Sekundäreinspritzanlage 6 mehr oder weniger lang zum Einspritzen von Kraftstoff angesteuert. Beispielsweise erfolgt die Ansteuerung der Einspritzdüse mittels Ansteuerimpulsen, die in einer vorbestimmten Frequenz getaktet sind.

Durch die Vorgabe der Solltemperatur, durch die Messung der Isttemperatur und durch eine vom Soll-Ist-Vergleich der Temperaturwerte abhängige Ansteuerung der Einspritzdüse bildet die Steuereinrichtung 8 einen geschlossenen Regelkreis aus, der es ermöglicht, die Abgastemperatur stromauf des Partikelfilters 4 auf den gewünschten Sollwert einzuregeln. Dieser Regelkreis enthält hierzu einen Regler, der im vorliegenden Fall durch die CPU 9 gebildet ist, so dass die CPU, im folgenden auch mit Regler 9 bezeichnet wird. Der Regler 9 kann dabei als Proportional- und/oder Integral- und/oder Differential-Regler 9 ausgebildet sein. Dementsprechend kann es sich beim Regler 9 z. B. um einen PID-Regler oder um einen PI-Regler handeln. Die genannten Regler 9 sind hier zweckmäßig durch die CPU bzw. durch einen durch die CPU repräsentierten Rechner oder Mikroprozessor bzw. durch deren Programmierung gebildet.

Der physikalische Zusammenhang zwischen der Stellgröße (Einspritzmenge) und der Regelgröße (Temperatur stromauf des Partikelfilters 4) definiert eine Regelstrecke, die ein Zeitverhalten aufweist, das die (zeitliche) Reaktion der Regelgröße auf eine Änderung der Stellgröße beschreibt.

Auch der Regelkreis, der zum Starten des Regenerationsvorgangs die Temperatur stromauf des Partikelfilters 4 einregelt, besitzt ein Zeitverhalten, das mittels bestimmter Regelparameter vorgegeben bzw. vorgebbar ist. Derartige Regelparameter sind beispielsweise ein Proportionalanteil und/oder ein Integralanteil und/oder ein Differentialanteil des Reglers 9 des Regelkreises.

Ziel jeder Regelung ist es, das Zeitverhalten des jeweiligen Regelkreises möglichst genau an das jeweilige Regelproblem, insbesondere an das Zeitverhalten der Regelstrecke, anzupassen. Problematisch beim Regeln der Abgastemperatur im Abgasstrang 3 der Brennkraftmaschine 1 ist dabei, dass die Brennkraftmaschine 1, vor allem bei einer Verwendung in einem Kraftfahrzeug, selten stationär arbeitet, sondern vorwiegend instationär, so dass sich ihr Betriebszustand, z. B. in Abhängigkeit der gewünschten Motorleistung, oft ändert. Beispielsweise wird für die gewünschte Temperaturerhöhung im Leerlaufbetrieb der Brennkraftmaschine 1 die Eindüsung einer relativ großen Kraftstoffmenge über einen vergleichsweise großen Zeitraum benötigt, während bei Volllast die gewünschte Temperaturerhöhung rasch auftritt, und zwar bei einer vergleichsweise geringen sekundär eingespritzten Kraftstoffmenge oder sogar ohne Sekundäreinspritzung. Um diese Einflüsse des jeweiligen Betriebszustands der Brennkraftmaschine 1 für den Start des Regenerationsvorgangs berücksichtigen zu können, werden bei der erfindungsgemäßen Steuereinrichtung 8 das Zeitverhalten des Regelkreises bestimmende Regelparameter in Abhängigkeit des Massenstromsignals permanent an das variierende Zeitverhalten der Regelstrecke adaptiert. Zu diesem Zweck erhält der Regler 9 das vom Massenstromsensor 11 ermittelte Massenstromsignal. Die Erfindung beruht hierbei auf der Erkenntnis, dass der Abgasmassenstrom bzw. der damit korrelierende Frischgasmassenstrom den aktuellen Betriebszustand der Brennkraftmaschine 1 repräsentativ wiederspiegeln bzw. damit korrelieren. Bei kleinen Lasten liegen kleine Massenströme vor, während zur Erzeugung großer Lasten entsprechend große Massenströme erforderlich sind. Durch die Überwachung des Massenstromsignals kann somit das Zeitverhalten des Regelkreises permanent an den aktuellen Betriebszustand der Brennkraftmaschine 1 angepasst werden, indem die entsprechenden Regelparameter auf geeignete Weise an das Zeitverhalten der Regelstrecke adaptiert werden. Beispielsweise werden hierbei permanent ein Proportionalglied und/oder ein Integralglied und/oder ein Differentialglied des Reglers 9 entsprechend justiert bzw. nachgeführt.

Für die Adaption der Regelparameter kann die Steuereinrichtung 8 beispielsweise die jeweils aktuellen Reglerparameter mit Hilfe des Massenstromsignals berechnen, wozu entsprechende Algorithmen oder Näherungsrechnungen herangezogen werden können. Alternativ ist es ebenso möglich, die jeweiligen Regelparameter mit Hilfe von Kennfeldern oder Kennlinien zu ermitteln, in denen die Regelparameter in Abhängigkeit der Massenströme abgelegt sind. Beispielsweise können in einem Speicher 29, der mit der CPU 9 verbunden ist, entsprechende Kennfelder oder Kennlinien abgelegt sein.

Bevorzugt erfolgt die Adaption des Regelkreises durch Angleichen der Regelparameter in Abhängigkeit des Massenstromsignals quasi in Echtzeit, also im wesentlichen zeitgleich mit der Varianz des überwachten Massenstroms. Auf diese Weise erfolgt die Anpassung des Zeitverhaltens des Regelkreises quasi gleichzeitig mit der Änderung des Massenstroms durch das Partikelfilter 4. Die Regelung wird dadurch besonders effektiv, was zum einen eine Überhitzung des Partikelfilters 4 und zum anderen einen unnötigen Kraftstoffverbrauch bei der Sekundäreinspritzung vermeidet.

Die erfindungsgemäße Steuereinrichtung 8 umfasst außerdem eine Notabschalteinrichtung 30, die zum einen die Temperatur des ersten Temperatursensors 14, also die Temperatur zwischen Oxidationskatalysator 5 und Partikelfilter 4 überwacht. Zum anderen überwacht die Notabschalteinrichtung 30 die Temperatur des dritten Temperatursensors 18, also die Temperatur stromab des Partikelfilters 4. Darüber hinaus kann die Notabschalteinrichtung 30 noch einen Kraftstoffdruck überwachen, der mit Hilfe eines Drucksensors 31 ermittelt wird. Dieser Drucksensor 31 ist hierzu an der Druckseite der Kraftstoffpumpe 6 angeordnet und bildet dabei ebenfalls einen Bestandteil der Sensorik 10. Des Weiteren kann auch die Temperatur des zweiten Temperatursensors 16, also die Temperatur stromauf des Oxidationskatalysators 5 überwacht werden, was jedoch eher im Hinblick darauf erfolgt, ob die Einspritzung von Sekundärkraftstoff überhaupt durchgeführt werden soll. Dementsprechend wird dieses Temperatursignal bevorzugt der CPU bzw. dem Regler 9 zugeführt und hier nicht der Notabschalteinrichtung 30.

Die Steuereinrichtung 8 umfasst außerdem eine Anzeigeeinheit 32, die beispielsweise dann aktiviert wird, wenn der erste Temperatursensor 14 und/oder der dritte Temperatursensor 18 eine überhöhte Temperatur ermittelt. Des Weiteren kann die Steuereinrichtung 8 einen Digital-Analog-Wandler 33 aufweisen, der beispielsweise Analogsignale des Massenstromsensors 11 oder eines anderen Sensors erst in Digitalsignale umwandelt, bevor diese in den jeweiligen Komponenten der Steuereinrichtung 8 weiter verarbeitet werden.

Das erfindungsgemäße Steuerungssystem 7 arbeitet wie folgt:

Ein Regenerationsvorgang für das Partikelfilter 4 kann beispielsweise über die Betätigungseinheit 28 manuell gestartet werden. Alternativ wird der Regenerationsvorgang automatisch dann gestartet, wenn das von der Auswerteeinheit 22 ermittelte Beladungssignal den vorbestimmten Wert erreicht oder überschreitet. Die Schalteinheit 23 gibt dann ein entsprechendes Aktivierungssignal an die CPU bzw. an den Regler 9. Vor einer Betätigung der Sekundäreinspritzanlage 6 zum Einspritzen von sekundärem Kraftstoff in den Abgasstrang 3 kann noch die Temperatur stromauf des Oxidationskatalysators 5 abgefragt werden. Falls diese Temperatur unterhalb einer vorbestimmten Minimaltemperatur liegt, die beispielsweise bei etwa 200° C liegen kann, wird der Einspritzvorgang nicht durchgeführt. Beispielsweise ist bei einer Temperatur unterhalb der Minimaltemperatur eine vollständige Umsetzung des eingedüsten Kraftstoffs im Oxidationskatalysator 5 nicht mehr sichergestellt, so dass unverbrannte Kohlenwasserstoffe aus dem Abgasstrang 3 austreten könnten. Dies solle nach Möglichkeit vermieden werden. Dabei ist zu berücksichtigen, dass durch die Einspritzung von Kraftstoff die Temperatur im Abgas stromauf des Oxidationskatalysators 5 zunächst gesenkt wird.

Falls die Abgastemperatur stromauf des Oxidationskatalysators 5 hoch genug ist, wird die Einspritzung von Kraftstoff durchgeführt. Regelziel ist dabei eine bestimmte Temperatur stromauf des Partikelfilters 4. Beispielsweise wird für den Start der daraufhin selbständig ablaufenden Verbrennungsreaktion eine Zündtemperatur von etwa 550° C benötigt. Regelziel ist es somit, die Temperatur nach dem Oxidationskatalysator 5 und vor dem Partikelfilter 4 auf z. B. 550 bis 650° einzuregeln.

Falls die Temperatur stromauf des Oxidationskatalysators 5 und stromauf des Partikelfilters 4 eine vorbestimmte Maximaltemperatur, beispielsweise 700° C, übersteigt, reagiert die Notabschalteinrichtung 30 mit der Deaktivierung des sekundären Einspritzvorgangs. Auf diese Weise soll eine Beschädigung des Partikelfilters 4 durch Überhitzung vermieden werden. Entsprechendes gilt auch für einen Temperaturanstieg stromab des Partikelfilters 4 über einen vorbestimmten Maximalwert, der beispielsweise bei etwa 900° C liegen kann. Gleichzeitig kann über die Anzeigeeinheit 32 dem Fahrzeugführer die Notabschaltung des Regenerationssystems signalisiert werden.

Des Weiteren wird vorzugsweise auch der Kraftstoffdruck überwacht. Falls der Kraftstoffdruck oberhalb eines vorbestimmten Maximaldrucks liegt oder unterhalb eines vorbestimmten Minimaldrucks liegt, wird der Einspritzvorgang beendet bzw. gar nicht erst gestartet. Beispielsweise soll der Einspritzdruck in einem Bereich zwischen 4 bis 6 bar liegen.

Erfindungswesentlich ist hierbei die Berücksichtigung des aktuellen Betriebszustands der Brennkraftmaschine 1 bei der Beurteilung des Beladungszustands des Partikelfilters 4 bzw. während des Startvorgangs innerhalb des Regelkreises durch Adaption von geeigneten Regelparametern an das Zeitverhalten der Regelstrecke.

## Patentansprüche

1. Verfahren zum Regenerieren eines in einem Abgasstrang (3) einer Brennkraftmaschine (1) angeordneten Partikelfilters (4), insbesondere in einem Kraftfahrzeug,
- bei dem ein Regenerationsvorgang dann gestartet wird, wenn ein mit einer Partikelbeladung des Partikelfilters (4) korrelierendes Beladungssignal einen vorbestimmten Grenzwert erreicht oder überschreitet, wobei das Beladungssignal aus einem Druckabfallsignal, das mit einem von einer Abgasströmung bei der Durchströmung des Partikelfilters (4) zu überwindenden Druckabfall korreliert, und aus einem Massenstromsignal, das aus einem mittels eines Massenstromsensors ermittelten Massenstrom eines der Brennkraftmaschine (1) zugeführten Frischgasstroms ermittelt wird und mit einem das Partikelfilter (4) durchströmenden Massenstrom korreliert, generiert wird, und/oder
- bei dem zum Starten des Regenerationsvorgangs eine Abgastemperatur stromauf des Partikelfilters (4) mittels eines Regelkreises auf einen vorbestimmten Sollwert eingeregelt wird, wobei Regelparameter des Regelkreises in Abhängigkeit eines Massenstromsignals, das mit einem das Partikelfilter (4) durchströmenden Massenstrom korreliert, permanent an ein Zeitverhalten der Regelstrecke adaptiert werden.

2. Verfahren nach Anspruch 1,
**dadurch gekennzeichnet,**
**dass** das Beladungssignal durch einen Quotienten aus Druckabfallsignal und Massenstromsignal gebildet wird.

3. Verfahren nach Anspruch 1 oder 2,
**dadurch gekennzeichnet,**
**dass** die Regelparameter ein Proportionalanteil und/oder ein Integralanteil und/oder ein Differentialanteil eines Reglers (9) des Regelkreises sind.

4. Verfahren nach einem der Ansprüche 1 bis 3,
**dadurch gekennzeichnet,**
**dass** die Regelparameter mittels des Massenstromsignals berechnet oder aus Kennfeldern oder Kennlinien ermittelt werden.

5. Verfahren nach einem der Ansprüche 1 bis 4,
**dadurch gekennzeichnet,**
**dass** die Ermittlung des Massenstromsignals permanent und die Adaption des Regelkreises im Wesentlichen zeitgleich oder in Echtzeit durchgeführt werden.

6. Verfahren nach einem der Ansprüche 1 bis 5,
**dadurch gekennzeichnet,**
**dass** im Abgasstrang (3) stromauf des Partikelfilters (4) ein Oxidationskatalysator (5) angeordnet ist, wobei die für die Regelung des Regenerationsvorgangs relevante Abgastemperatur stromab des Oxidationskatalysators (5) ermittelt wird.

7. Verfahren nach einem der Ansprüche 1 bis 6,
**dadurch gekennzeichnet,**
**dass** der Regenerationsvorgang abgebrochen oder nicht gestartet wird, wenn zumindest eines der folgenden Schaltkriterien vorliegt:
- eine Abgastemperatur stromauf eines Oxidationskatalysators (5), der stromauf des Partikelfilters (4) im Abgasstrang (3) angeordnet ist, liegt unterhalb einer vorbestimmten Minimaltemperatur,
- ein Kraftstoffdruck einer Sekundäreinspritzanlage (6), die zur Abgastemperaturerhöhung Kraftstoff stromauf eines Oxidationskatalysators (5) in den Abgasstrang (3) eindüst, liegt unterhalb eines vorbestimmten Minimaldrucks oder oberhalb eines vorbestimmten Maximaldrucks,
- die Abgastemperatur stromauf des Partikelfilters (4) liegt oberhalb einer vorbestimmten Maximaltemperatur,
- eine Abgastemperatur stromab des Partikelfilters (4) liegt oberhalb einer vorbestimmten Maximaltemperatur.

8. Abgasanlage einer Brennkraftmaschine (1), insbesondere in einem Kraftfahrzeug,
- mit einem in einem Abgasstrang (3) der Brennkraftmaschine (1) angeordneten Partikelfilter (4),
- mit einer Steuereinrichtung (8) zum Steuern und/oder Regeln einer Regeneration des Partikelfilters (4),
- mit einer einen Massenstromsensor umfassenden Sensorik (10) zur Ermittlung zumindest eines mit einem das Partikelfilter (4) durchströmenden Massenstrom korrelierenden Massenstromsignals aus einem Massenstrom eines der Brennkraftmaschine (1) zugeführten Frischgasstroms, mit einem von einer Abgasströmung bei der Durchströmung des Partikelfilters (4) zu überwindenden Druckabfall korrelierenden Druckabfallsignals, und mit einer Abgastemperatur stromauf des Partikelfilters (4) korrelierenden Temperatursignals,
- wobei die Steuereinrichtung (8) so ausgestaltet ist, dass sie einen Regenerationsvorgang dann startet, wenn ein mit einer Partikelbeladung des Partikelfilters (4) korrelierendes Beladungssignal einen vorbestimmten Grenzwert erreicht oder übersteigt, wobei die Steuereinrichtung (8) das Beladungssignal aus dem Druckabfallsignal und aus dem Massenstromsignal ermittelt, und/oder
- wobei die Steuereinrichtung (8) so ausgestaltet ist, dass sie zum Start eines Regenerationsvorgangs die Abgastemperatur stromauf des Partikelfilters (4) mittels eines Regelkreises auf einen vorbestimmten Sollwert einregelt, wobei die Steuereinrichtung (8) Regelparameter des Regelkreises in Abhängigkeit des Massenstromsignals permanent an ein Zeitverhalten der Regelstrecke adaptiert.

9. Abgasanlage nach Anspruch 8,
**dadurch gekennzeichnet,**
**dass** die Steuereinrichtung (8) das Beladungssignal durch einen Quotienten aus Druckabfallsignal und Massenstromsignal bildet.

10. Abgasanlage nach Anspruch 8 oder 9,
**dadurch gekennzeichnet,**
**dass** die Regelparameter ein Proportionalanteil und/oder ein Integralanteil und/oder ein Differentialanteil eines Reglers (9) des Regelkreises sind.

11. Abgasanlage nach einem der Ansprüche 8 bis 10,
**dadurch gekennzeichnet,**
**dass** die Steuereinrichtung (8) die Regelparameter mittels des Massenstromsignals berechnet oder aus Kennfeldern oder Kennlinien ermittelt.

12. Abgasanlage nach einem der Ansprüche 8 bis 11,
**dadurch gekennzeichnet,**
**dass** die Steuereinrichtung (8) die Ermittlung des Massenstromsignals permanent und die Adaption des Regelkreises in Echtzeit oder im Wesentlichen zeitgleich durchführt.

13. Abgasanlage nach einem der Ansprüche 8 bis 12,
**dadurch gekennzeichnet,**
**dass** im Abgasstrang (3) stromauf des Partikelfilters (4) ein Oxidationskatalysator (5) angeordnet ist, wobei die Steuereinrichtung (8) das für die Regelung des Regenerationsvorgangs relevante Temperatursignal stromab des Oxidationskatalysators (5) ermittelt.

14. Abgasanlage nach einem der Ansprüche 8 bis 13,
**dadurch gekennzeichnet,**
**dass** die Steuereinrichtung (8) den Regenerationsvorgang abbricht oder nicht startet, wenn zumindest eines der folgenden Abschaltkriterien vorliegt:
- eine Abgastemperatur stromauf eines Oxidationskatalysators (5), der stromauf des Partikelfilters (4) im Abgasstrang (3) angeordnet ist, liegt unterhalb einer vorbestimmten Minimaltemperatur,
- ein Kraftstoffdruck einer Sekundäreinspritzanlage (6), die zur Abgastemperaturerhöhung Kraftstoff stromauf eines Oxidationskatalysators (5) in den Abgasstrang (3) eindüst, liegt unterhalb eines vorbestimmten Minimaldrucks oder oberhalb eines vorbestimmten Maximaldrucks,
- die Abgastemperatur stromauf des Partikelfilters (4) liegt oberhalb einer vorbestimmten Maximaltemperatur,
- eine Abgastemperatur stromab des Partikelfilters (4) liegt oberhalb einer vorbestimmten Maximaltemperatur.

## Claims

1. A method for regenerating a particle filter (4) which is arranged in an exhaust gas system (3) of an internal combustion engine (1), in particular in a motor vehicle,
- with which a regeneration process is started in particular when a loading signal correlating to a particle loading of the particle filter (4) reaches or exceeds a predetermined limit value, wherein the loading signal is generated from a pressure drop signal, which correlates to a pressure drop that has to be overcome by an exhaust gas flow while flowing through the particle filter (4), and from a mass flow signal, which is determined from a mass flow determined by means of a mass flow sensor of a fresh gas flow fed to the internal combustion engine (1) and correlates to a mass flow flowing through the particle filter (4), and/or
- with which for starting the regeneration process an exhaust gas temperature upstream of the particle filter (4) is controlled to a predetermined setpoint value by means of a control circuit, wherein control parameters of the control circuit are continuously adapted to a time response of the control section as a function of a mass flow signal, which correlates to a mass flow flowing through the particle filter (4).

2. The method according to claim 1,
**characterized in**
**that** the loading signal is formed by a quotient of pressure drop signal and mass flow signal.

3. The method according to claim 1 or 2,
**characterized in**
**that** the control parameters are a proportional component and/or an integral component and/or a differential component of a controller (9) of the control circuit.

4. The method according to any one of the claims 1 to 3,
**characterized in**
**that** the control parameters are calculated by means of the mass flow signal or from families of characteristics or characteristic lines.

5. The method according to any one of the claims 1 to 4,
**characterized in**
**that** determining the mass flow signal is carried out continuously and the adaptation of the control circuit substantially at the same time or in real time.

6. The method according to any one of the claims 1 to 5,
**characterized in**
**that** in the exhaust gas system (3) upstream of the particle filter (4) an oxidation catalytic converter (5) is arranged, wherein the control of the exhaust gas temperature that is relevant to the regeneration process is determined downstream of the oxidation catalytic converter (5).

7. The method according to any one of the claims 1 to 6,
**characterized in**
**that** the regeneration process is aborted or not started when at least one of the following switching criteria is present:
- an exhaust gas temperature upstream of an oxidation catalytic converter (5), which is arranged upstream of the particle filter (4) in the exhaust gas system (3), is below a predetermined minimum temperature,
- a fuel pressure of a secondary injection system (6), which for increasing the exhaust gas temperature injects fuel into the exhaust gas system (3) upstream of an oxidation catalytic converter (5), is below a predetermined minimum pressure or above a predetermined maximum pressure,
- the exhaust gas temperature upstream of the particle filter (4) is above a predetermined maximum temperature,
- an exhaust gas temperature upstream of the particle filter (4) is above a predetermined maximum temperature.

8. An exhaust system of an internal combustion engine (1), in particular in a motor vehicle,
- with a particle filter (4) arranged in an exhaust gas system (3) of the internal combustion engine (1),
- with a control device (8) for controlling and/or regulating a regeneration of the particle filter (4),
- with a sensor device (10) comprising a mass flow sensor for determining at least one mass flow signal correlating to a mass flow flowing through the particle filter (4) of a mass flow of a fresh gas flow fed to the internal combustion engine (1), with a pressure drop signal correlating to a pressure drop that has to be overcome by an exhaust gas flow when flowing through the particle filter (4), and with a temperature signal correlating to an exhaust gas temperature upstream of the particle filter (4),
- wherein the control device (8) is configured so that it starts a regeneration process in particular when a loading signal which correlates to a particle loading of the particle filter (4) reaches or exceeds a predetermined value, wherein the control device (8) determines the loading signal from the pressure drop signal and from the mass flow signal, and/or
- wherein the control device (8) is configured so that for restarting a regeneration process it controls the exhaust gas temperature upstream of the particle filter (4) to a predetermined setpoint value by means of a control circuit, wherein the control device (8) continuously adapts control parameters of the control circuit to a time response of the control circuit as a function of the mass flow signal.

9. The exhaust system according to claim 8,
**characterized in**
**that** the control device (8) forms the loading signal through a quotient of pressure drop signal and mass flow signal.

10. The exhaust system according to claim 8 or 9,
**characterized in**
**that** the control parameters are a proportional component and/or an integral component and/or a differential component of a controller (9) of the control circuit.

11. The exhaust system according to any one of the claims 8 to 10,
**characterized in**
**that** the control device (8) calculates the control parameters by means of the mass flow signal or determines the control parameters from families of characteristics or characteristic lines.

12. The exhaust system according to any one of the claims 8 to 11,
**characterized in**
**that** the control device (8) continuously determines the mass flow signal and carries out the adaptation of the control circuit in real time or substantially at the same time.

13. The exhaust system according to any one of the claims 8 to 12,
**characterized in**
**that** in the exhaust gas system (3) upstream of the particle filter (4) an oxidation catalytic converter (5) is arranged, wherein the control device (8) determines the temperature signal which is relevant to the controlling of the regeneration process downstream of the oxidation catalytic converter (5).

14. The exhaust system according to any one of the claims 8 to 13,
**characterized in**
**that** the control device (8) aborts or does not start the regeneration process when at least one of the following switch-off criteria is present:
- an exhaust gas temperature upstream of an oxidation catalytic converter (5), which is arranged upstream of the particle filter (4) in the exhaust gas system (3), is below a predetermined minimum temperature,
- a fuel pressure of a secondary injection system (6), which injects fuel into the exhaust gas system (3) upstream of an oxidation catalytic converter (5) to increase the exhaust gas temperature, is below a predetermined minimum pressure or above a predetermined maximum pressure,
- the exhaust gas temperature upstream of the particle filter (4) is above a predetermined maximum temperature,
- an exhaust gas temperature downstream of the particle filter (4) is above a predetermined maximum temperature.

## Revendications

1. Procédé de régénération d'un filtre à particules (4) disposé dans une colonne de gaz d'échappement (3) d'un moteur à combustion interne (1), notamment dans un véhicule automobile,
- dans lequel un processus de régénération est démarré quand un signal de charge d'une valeur limite prédéterminée, corrélant avec une charge en particules du filtre à particules (4), est atteint ou dépassé, dans lequel le signal de charge est généré d'après un signal de chute de pression, qui corrèle avec une chute de pression à surmonter par un courant de gaz d'échappement lors de l'écoulement à travers le filtre à particules (4), et d'après un signal de débit massique, qui est déterminé d'après un débit massique d'un courant de gaz frais alimenté dans le moteur à combustion interne (1)au moyen d'un capteur de débit massique et est corrélé avec un débit massique s'écoulant à travers le filtre à particules (4), et/ou
- dans lequel au démarrage du processus de régénération une température de gaz d'échappement en amont du filtre à particules (4) est réglée au moyen d'un circuit de régulation à une valeur de consigne prédéterminée, dans lequel des paramètres de régulation du circuit de régulation en fonction d'un signal de débit massique, qui corrèle avec un débit massique s'écoulant à travers le filtre à particules (4), sont adaptés en permanence à un comportement temporel de la branche de régulation.

2. Procédé selon la revendication 1,
**caractérisé en ce**
**que** le signal de charge est formé par un quotient d'un signal de chute de pression et d'un signal de débit massique.

3. Procédé selon les revendications 1 ou 2,
**caractérisé en ce**
**que** les paramètres de régulation sont une fraction proportionnelle et/ou une fraction intégrale et/ou une fraction différentielle d'un régulateur (9) du circuit de régulation.

4. Procédé selon une des revendications 1 à 3,
**caractérisé en ce**
**que** les paramètres de régulation sont calculés au moyen du signal de débit massique ou d'après des diagrammes caractéristiques ou courbes caractéristiques.

5. Procédé selon une des revendications 1 à 4,
**caractérisé en ce**
**que** la détermination du signal de débit massique est effectuée en permanence et l'adaptation du circuit de régulation est effectuée essentiellement ponctuellement ou en temps réel.

6. Procédé selon une des revendications 1 à 5,
**caractérisé en ce**
**que** dans le colonne du gaz d'échappement (3) en amont du filtre à particules (4) un catalyseur d'oxydation (5) est disposé, dans lequel la température de gaz d'échappement significative pour la régulation du processus de régénération est déterminée en aval du catalyseur d'oxydation (5).

7. Procédé selon une des revendications 1 à 6,
**caractérisé en ce**
**que** le processus de régénération est interrompu ou n'est pas démarré, quand au moins un des critères de mise hors service suivants est prévent :
- une température de gaz d'échappement en amont d'un catalyseur d'oxydation (5), qui est disposé en amont du filtre à particules (4) dans la colonne de gaz d'échappement (3), se situe au-dessous d'une température minimale prédéterminée,
- une pression de carburant d'une installation d'injection secondaire (6), qui injecte du carburant en amont d'un catalyseur d'oxydation (5) dans la colonne de gaz d'échappement (3) afin d'augmenter la température du gaz d'échappement, est située au-dessous d'une pression minimale prédéterminée ou au-dessus d'une pression maximale prédéterminée,
- la température de gaz d'échappement en amont du filtre à particules (4) est située au-dessus d'une température maximale prédéterminée,
- une température de gaz d'échappement en aval du filtre à particules (4) est située au-dessus d'une température maximale prédéterminée.

8. Installation de gaz d'échappement d'un moteur à combustion interne (1), notamment dans un véhicule automobile,
- comportant un filtre à particules (4) disposé dans une colonne de gaz d'échappement (3) du moteur à combustion interne (1),
- comportant un dispositif de commande (8) pour commander et/ou réguler une régénération du filtre à particules (4),
- comportant un détecteur (10) comprenant un capteur de débit massique pour déterminer au moins un signal de débit massique corrélant avec un débit massique s'écoulant au travers du filtre à particules (4)d'après un débit massique d'un courant de gaza frais alimenté dans le moteur à combustion interne (1), avec un signal de chute de pression corrélant avec une chute de pression à surmonter par un courant de gaz d'échappement lors de l'écoulement à travers le filtre à particules (4) et un signal de température corrélant avec une température de gaz d'échappement en amont du filtre à particules (4),
- dans laquelle le dispositif de commande (8) est conçu de telle sorte qu'il démarre un processus de régénération quand un signal de charge corrélant avec une charge en particules du filtre à particules (4) atteint ou dépasse une valeur limite prédéterminée, dans laquelle le dispositif de commande (8) détermine le signal de charge d'après le signal de chute de pression et d'après le signal de débit massique, et/ou
- dans laquelle le dispositif de commande (8) est conçu de telle sorte qu'il règle au démarrage d'un processus de régénération la température de gaz d'échappement en amont du filtre à particules (4) au moyen d'un circuit de régulation à une valeur de consigne prédéterminée, dans laquelle le dispositif de commande (8) adapte en permanence des paramètres de régulation du circuit de régulation à un comportement temporel de la branche de régulation en fonction du signal de débit massique.

9. Installation de gaz d'échappement selon la revendication 8,
**caractérisé en ce**
**que** le dispositif de commande (8) forme le signal de charge par un quotient du signal de chute de pression et du signal de débit massique.

10. Installation de gaz d'échappement selon les revendications 8 ou 9,
**caractérisée en ce**
**que** les paramètres de régulation sont une fraction proportionnelle et/ou une fraction intégrale et/ou une fraction différentielle d'un régulateur (9) du circuit de régulation.

11. Installation de gaz d'échappement selon une des revendications 8 à 10,
**caractérisée en ce**
**que** le dispositif de commande (8) calcule les paramètres de régulation au moyen du signal de débit massique ou d'après des diagrammes caractéristiques ou courbes caractéristiques.

12. Installation de gaz d'échappement selon une des revendications 8 à 11,
**caractérisée en ce**
**que** le dispositif de commande (8) effectue la détermination du signal de débit massique en permanence et l'adaptation du circuit de régulation en temps réel ou essentiellement ponctuellement.

13. Installation de gaz d'échappement selon une des revendications 8 à 12,
**caractérisée en ce**
**que** dans la colonne de gaz d'échappement (3) en amont du filtre à particules (4) un catalyseur d'oxydation (5) est disposé, dans laquelle le dispositif de commande (8) détermine le signal de température significatif pour la régulation du processus de régénération en aval du catalyseur d'oxydation (5).

14. Installation de gaz d'échappement selon une des revendications 8 à 13,
**caractérisée en ce**
**que** le dispositif de commande (8) interrompt ou ne démarre pas le processus de régénération, quand au moins un des critères de mise hors service suivants est présent :
- une température de gaz d'échappement en amont d'un catalyseur d'oxydation (5), qui est disposé en amont du filtre à particules (4) dans la colonne de gaz d'échappement (3), se situe au-dessous d'une température minimale prédéterminée,
- une pression de carburant d'une installation d'injection secondaire (6), qui injecte du carburant en amont d'un catalyseur d'oxydation (5) dans la colonne de gaz d'échappement (3) afin d'augmenter la température du gaz d'échappement, est située au-dessous d'une pression minimale prédéterminée ou au-dessus d'une pression maximale prédéterminée,
- la température de gaz d'échappement en amont du filtre à particules (4) est située au-dessus d'une température maximale prédéterminée,
- une température de gaz d'échappement en aval du filtre à particules (4) est située au-dessus d'une température maximale prédéterminée.
